# EUROPEAN PATENT APPLICATION

(11) **EP 1 829 947 A2**
(43) Date of publication of application: **05.09.2007**
(21) Application number: 07004191.8
(22) Date of filing: 28.02.2007
(51) Int. Cl.: C09J 7/02

(54) **Pressure-sensitive adhesive sheet**

(30) Priority: 01.03.2006 JP 2006054570; 20.12.2006 JP 2006342322
(71) Applicant: NITTO DENKO CORPORATION, Osaka (JP)
(72) Inventor: Ikeya, Mami c/o NITTO DENKO CORPORATION, Osaka (JP); Takahashi, Akiko c/o NITTO DENKO CORPORATION, Osaka (JP)
(74) Representative: Grünecker, Kinkeldey, Stockmair & Schwanhäusser Anwaltssozietät

(57) **Abstract**

The present invention relates to a pressure-sensitive adhesive sheet, which includes: a base material including a foamed substance; and a pressure-sensitive adhesive layer disposed on at least one surface of the base material, in which the pressure-sensitive adhesive layer is formed by a water-dispersible acrylic pressure-sensitive adhesive composition containing a water-dispersible acrylic copolymer (a) having a weight-average molecular weight of from 400,000 to 900,000, said copolymer containing a (meth)acrylic acid alkyl ester having 2 to 14 carbon atoms in the alkyl group thereof as a principal monomer component and a functional group-containing monomer as a monomer component; and a water-dispersible acrylic low-molecular weight component (b) having a weight-average molecular weight of from 5,000 to 250,000. According to the pressure-sensitive adhesive sheet, a pressure-sensitive adhesive layer is formed with an excellent adhesivity on a base material foamed by a foamed substance, without restriction in the method of forming the pressure-sensitive adhesive layer or in the type of a crosslinking agent.

## Description

### FIELD OF THE INVENTION

The present invention relates to a pressure-sensitive adhesive sheet, and more particularly to a pressure-sensitive adhesive sheet in which a pressure-sensitive adhesive layer is formed with an excellent adhesivity to a base material formed by a foamed substance, without restriction in the method for forming the pressure-sensitive adhesive layer.

### BACKGROUND OF THE INVENTION

Acrylic pressure-sensitive adhesives of solvent type are environmentally undesirable because of the use of organic solvents, and are recently regarded increasingly as a cause of sick house syndrome, and elimination of solvent is becoming an important issue. On the other hand, water-dispersible acrylic pressure-sensitive adhesive materials utilize water as the solvent, instead of the organic solvent, and have little detrimental influences on the environment and on the human body. Because of such background, various developments utilizing water-dispersible acrylic pressure-sensitive adhesive materials have been conducted (cf. Patent Reference 1).

While the demand is thus increasing for the pressure-sensitive adhesive sheet utilizing the water-dispersible acrylic pressure-sensitive adhesive, certain applications require a pressure-sensitive adhesive sheet utilizing a foamed substance as the base material, and a technology of adhering the pressure-sensitive adhesive material to the base material formed by a foamed substance. However, the water-dispersible pressure-sensitive adhesive generally shows an inferior adhesivity to the base material formed by the foamed substance, and, when it is employed as a pressure-sensitive adhesive composition for forming a pressure-sensitive adhesive layer in a pressure-sensitive adhesive tape, a pressure-sensitive adhesive sheet or a pressure-sensitive adhesive label, has been utilized only in very limited applications.

In order to solve such limitation, proposed is a pressure-sensitive adhesive composition formed from (I) a water-dispersible copolymer of a weight-average molecular weight of from 200,000 to 800,000 formed by an emulsion polymerization of copolymer components that include an unsaturated monomer having a carboxyl group and an alkyl (meth)acrylate having 4 to 18 carbon atoms in the alkyl group, and (II) a (co)polymer of a weight-average molecular weight of from 200,000 to 800,000 containing addition-polymerizable oxazoline (cf. Patent Reference 2). However, this invention is incapable of obtaining a sufficient cohesive power unless the amount of (co)polymer (II) containing addition-polymerizable oxazoline is increased, presumably due to a decreased weight-average molecular weight of the water-dispersible copolymer, thus resulting in detriments such as a lowered productivity and an increased cost.

Also proposed is a pressure-sensitive adhesive composition which contains a (meth)acrylic acid ester type copolymer having a weight-average molecular weight of 1,000,000 or higher and also contains, with respect to 100 parts by weight thereof, 5 to 1,000 parts by weight of a (meth)acrylic acid ester type oligomer having a weight-average molecular weight of from 1,000 to 10,000 and which further contains a bifunctional crosslinking agent (Patent Reference 3). However, this invention is described as being excellent in the adhesivity to a member to be adhered, but, the adhesivity to an adhered member, which means an adhesion after the completion of the crosslinking reaction, and the adhesivity to a base material, which means an adhesion during the progress of the crosslinking reaction, are different phenomena so that such adhesivities do not have a close correlation with each other. Also a water-dispersible acrylic pressure-sensitive adhesive composition is not mentioned.

Also proposed is a water-dispersible pressure-sensitive adhesive composition prepared by adding a carbodiimide-based crosslinking agent and an epoxy-based crosslinking agent to a water-dispersible acrylic pressure-sensitive adhesive prepared by an emulsion polymerization of copolymer components which includes an unsaturated monomer having a carboxyl group and an alkyl (meth)acrylate having 4 to 12 carbon atoms in the alkyl group (cf. Patent Reference 4). Also proposed is a water-dispersible pressure-sensitive adhesive composition, prepared by polymerizing a carboxyl group-containing ethylenic unsaturated monomer, which contains a (meth)acrylic acid alkyl ester as a principal component, with a resin emulsion [I] which is obtained by an emulsion polymerization of oil-soluble components including an ethylenic unsaturated monomer, which contains a (meth)acrylic acid alkyl ester as a principal component, and a resin for providing a pressure-sensitive adhesive property, and by blending at least a compound selected from carbodiimide compounds, oxazoline compounds, aziridine compounds and hydrazine compounds as a crosslinking agent (cf. Patent Reference 5). Further proposed is an aqueous emulsion type pressure-sensitive adhesive composition of single liquid type, prepared by blending a water-dispersible crosslinking agent containing an oxazoline group, with a water-dispersible copolymer of an acrylic pressure-sensitive adhesive composition of a weight-average molecular weight of at least 1,000,000, which is prepared by copolymerizing a (meth)acrylic acid alkyl ester having 4 to 18 carbon atoms in the alkyl group as a principal component and a carboxyl group-containing monomer (cf. Patent Reference 6).
Patent Reference 1: JP-A-2001-131511
Patent Reference 2: JP-A-2-150482
Patent Reference 3: JP-A-2001-335767
Patent Reference 4: JP-A-2004-217838
Patent Reference 5: JP-A-2003-96420
Patent Reference 6: JP-A-2004-189933

### SUMMARY OF THE INVENTION

However, in all these pressure-sensitive adhesive compositions, the adhesivity is improved by adhering with the base material during the progress of the crosslinking reaction, so that the improvement is achieved only in the case of employing a specified crosslinking agent having a slow reaction speed, and a water-dispersible pressure-sensitive adhesive, capable of improving the adhesivity to a base material formed by a foamed substance without restriction on the crosslinking agent, has not been proposed nor disclosed at all. Thus, a production process of executing adhesion by a transfer method after the completion of the crosslinking reaction involves a drawback that a sufficient adhesivity to the base material formed by a foamed substance cannot be obtained. Further, in these pressure-sensitive adhesive compositions, the base material formed by the foamed substance has not been described nor disclosed in detail.

In consideration of the foregoing, an object of the present invention is to provide a pressure-sensitive adhesive sheet in which a pressure-sensitive adhesive layer is formed with an excellent adhesivity on a base material formed by a foamed substance, without restriction in the method of forming the pressure-sensitive adhesive layer.

Another object of the present invention is to provide a pressure-sensitive adhesive sheet in which a pressure-sensitive adhesive layer is formed with an excellent adhesivity on a base material formed by a foamed substance, without restriction in the type of a crosslinking agent.

Still another object of the present invention is to provide a pressure-sensitive adhesive sheet having a satisfactory adhesivity to a rough surface, and being excellent in a holding power.

As a result of intensive investigations undertaken by the present inventors, it is found that a water-dispersible acrylic pressure-sensitive adhesive composition, obtained by combining a water-dispersible acrylic copolymer having a specified structure with a water-dispersible acrylic low-molecular weight component having a specified weight-average molecular weight, allows to form a pressure-sensitive adhesive layer with an excellent adhesivity on a base material formed by a foamed substance, without restriction in the method of forming the pressure-sensitive adhesive layer or in the type of the crosslinking agent, and to obtain a pressure-sensitive adhesive sheet having a satisfactory adhesivity to a rough surface and an excellent holding power. The present invention has been made based on these findings.

### BRIEF DESCRIPTION OF THE DRAWINGS

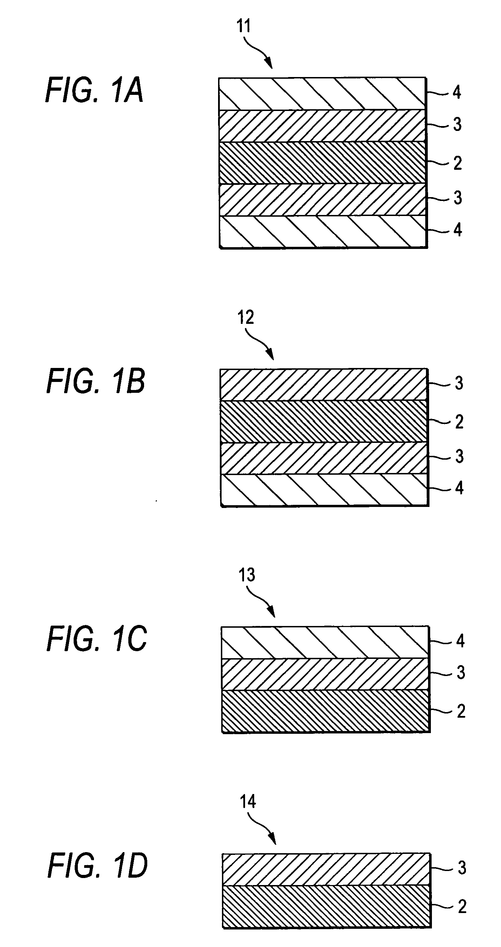

Figs. 1A to 1D are respectively schematic cross-sectional views showing examples of the pressure-sensitive adhesive sheet of the present invention.

### Description of Symbols

- 11 - 14: pressure-sensitive adhesive sheet
- 2: base material formed by foamed substance
- 3: pressure-sensitive adhesive layer
- 4: releasable liner

### DETAILED DESCRIPTION OF THE INVENTION

Namely, the present invention relates to the followings.
(1) A pressure-sensitive adhesive sheet, which comprises:
   a base material comprising a foamed substance; and
   a pressure-sensitive adhesive layer disposed on at least one surface of the base material,
   wherein the pressure-sensitive adhesive layer is formed by a water-dispersible acrylic pressure-sensitive adhesive composition containing:
      a water-dispersible acrylic copolymer (a) having a weight-average molecular weight of from 400,000 to 900,000, said copolymer comprising a (meth)acrylic acid alkyl ester having 2 to 14 carbon atoms in the alkyl group thereof as a principal monomer component and a functional group-containing monomer as a monomer component; and
      a water-dispersible acrylic low-molecular weight component (b) having a weight-average molecular weight of from 5,000 to 250,000.
(2) The pressure-sensitive adhesive sheet according to (1), wherein the water-dispersible acrylic pressure-sensitive adhesive composition contains the water-dispersible acrylic low-molecular weight component (b) in a proportion of from 10 to 50wt% with respect to the water-dispersible acrylic copolymer (a).
(3) The pressure-sensitive adhesive sheet according to (2), wherein the water-dispersible acrylic pressure-sensitive adhesive composition contains the water-dispersible acrylic low-molecular weight component (b) in a proportion of from 30 to 50wt% with respect to the water-dispersible acrylic copolymer (a).
(4) The pressure-sensitive adhesive sheet according to (1), wherein the water-dispersible acrylic copolymer (a) has a weight-average molecular weight of from 500,000 to 800,000.
(5) The pressure-sensitive adhesive sheet according to (4), wherein the water-dispersible acrylic copolymer (a) has a weight-average molecular weight of from 500,000 to 700,000.
(6) The pressure-sensitive adhesive sheet according to (1), wherein the (meth)acrylic acid alkyl ester contained in the water-dispersible acrylic copolymer (a) has 2 to 10 carbon atoms in the alkyl group thereof.
(7) The pressure-sensitive adhesive sheet according to (1), wherein the water-dispersible acrylic low-molecular weight component (b) has a weight-average molecular weight of from 10, 000 to 250, 000.
(8) The pressure-sensitive adhesive sheet according to (7), wherein the water-dispersible acrylic low-molecular weight component (b) has a weight-average molecular weight of from 40,000 to 250,000.

According to the pressure-sensitive adhesive sheet of the invention, owing to the aforementioned structure, the pressure-sensitive adhesive layer is formed with an excellent adhesivity on the base material formed by a foamed substance, without restriction in the method of forming the pressure-sensitive adhesive layer. Further, the pressure-sensitive adhesive layer is formed with an excellent adhesivity on the base material formed by a foamed substance, without restriction in the type of the crosslinking agent. Furthermore, it has a satisfactory adhesivity to a rough surface and an excellent holding power.

In the followings, embodiments of the present invention will be described in detail, eventually with reference to the accompanying drawings, in which like members or parts may be represented by same symbols.

The pressure-sensitive adhesive sheet of the present invention has, as illustrated in Figs. 1A to 1D, a structure having a pressure-sensitive adhesive layer on at least one surface of a base material, wherein the base material is formed by a foamed substance and the pressure-sensitive adhesive layer is formed by a water-dispersible acrylic pressure-sensitive adhesive composition ("water-dispersible acrylic pressure-sensitive adhesive composition for foamed substance") including a water-dispersible acrylic copolymer (a) which contains a (meth)acrylic acid alkyl ester having 2 to 14 carbon atoms in the alkyl group thereof as a principal monomer component and a functional group-containing monomer as a monomer component and which has a weight-average molecular weight of from 400,000 to 900,000, and a water-dispersible acrylic low-molecular weight component (b) having a weight-average molecular weight of from 5,000 to 250,000. The pressure-sensitive adhesive sheet, even though utilizing a base material formed by a foamed substance, employs the water-dispersible acrylic pressure-sensitive adhesive composition for foamed substance as the pressure-sensitive adhesive composition for forming the pressure-sensitive adhesive layer, so that the pressure-sensitive adhesive layer is formed with an excellent adhesivity on the base material formed by a foamed substance regardless of the method for forming the pressure-sensitive adhesive layer or the type of crosslinking agent, and an excellent adhesivity to a rough surface and an excellent holding power can be exhibited.

Figs. 1A to 1D are schematic cross-sectional views illustrating examples of the pressure-sensitive adhesive sheet of the invention. In Figs. 1A to 1D, illustrated are pressure-sensitive adhesive sheets 11-14, a base material 2 formed by a foamed substance, a pressure-sensitive adhesive layer 3, and a releasable liner 4. The pressure-sensitive adhesive layer 3 is formed by a water-dispersible acrylic pressure-sensitive adhesive composition for foamed substance (namely a water-dispersible acrylic pressure-sensitive adhesive composition including a water-dispersible acrylic copolymer (a) which contains a (meth)acrylic acid alkyl ester having 2 to 14 carbon atoms in the alkyl group thereof as a principal monomer component and a functional group-containing monomer as a monomer component and which has a weight-average molecular weight of from 400,000 to 900,000, and a water-dispersible acrylic low-molecular weight component (b) having a weight-average molecular weight of from 5,000 to 250,000.

The pressure-sensitive adhesive sheet 11 illustrated in Fig. 1A has a structure in which pressure-sensitive adhesive layers 3 are formed on both surfaces of a base material 2 formed by a foamed substance and each of the pressure-sensitive adhesive layers 3 on both surfaces is protected by a releasable liner 4 having a releasable surface on one side only. Further, the pressure-sensitive adhesive sheet 12 illustrated in Fig. 1B has a structure in which pressure-sensitive adhesive layers 3 are formed on both surfaces of a base material 2 formed by a foamed substance, while either one of the pressure-sensitive adhesive layers 3 is protected by a releasable liner 4 having releasable surfaces on both sides, and the other pressure-sensitive adhesive layer 3 can be protected by the other releasable surface of the releasable liner 4 by winding the pressure-sensitive adhesive sheet 12 into a roll.

The pressure-sensitive adhesive sheet 13 illustrated in Fig. 1C has a structure in which a pressure-sensitive adhesive layer 3 is formed on one surface of a base material 2 formed by a foamed substance and the pressure-sensitive adhesive layer 3 is protected by a releasable liner 4 having a releasable surface on one side only. The pressure-sensitive adhesive sheet 14 illustrated in Fig. 1D has a structure in which a pressure-sensitive adhesive layer 3 is formed on one surface of a base material 2 formed by a foamed substance, while the rear surface of the base material 2 is constructed as a releasable surface, and the pressure-sensitive adhesive layer 3 can be protected by the releasable surface formed on the rear surface of the base material 2 formed by a foamed substance, by winding the pressure-sensitive adhesive sheet 14 into a roll.

Thus, the pressure--sensitive adhesive sheet of the present invention has a structure having a pressure-sensitive adhesive layer on at least one surface of a base material formed by a foamed substance (structure of pressure-sensitive adhesive sheet with a base), and may be constructed as a double-faced pressure-sensitive adhesive sheet with a base, having pressure-sensitive adhesive surfaces on both sides, or a pressure-sensitive adhesive sheet with a base, having a pressure-sensitive adhesive surface on one surface only (single-faced pressure-sensitive adhesive sheet with a base). In the case that the pressure-sensitive adhesive sheet is a double-faced pressure-sensitive adhesive sheet with a base, the both pressure-sensitive adhesive surfaces may be protected respectively by two releasable liners, each having a releasable surface on at least a side, or protected by a single releasable liner having releasable surfaces on both sides. On the other hand, in the case that the pressure-sensitive adhesive sheet is a single-faced pressure-sensitive adhesive sheet with a base, the protection may be made by a releasable liner having a releasable surface on at least one side thereof or by a releasably treated layer, formed on the rear surface of the base material formed by a foamed substance, in a state wound into a roll.

### Base material formed by foamed substance

In the pressure-sensitive adhesive sheet of the present invention, the base material formed by a foamed substance is not particularly restricted as long as the base material is formed by foamed plastics. The plastic material (including rubber material) for forming the foamed plastics is not particularly restricted and may be selected from known plastics. The plastic material may be employed singly or in a combination of two or more kinds.

Specific examples of the foamed plastics include olefinic foamed resins such as foamed polyethylene or foamed polypropylene; styrenic foamed resins such as foamed polystyrene; urethane-type foamed resins such as foamed polyurethane; and polyvinyl chloride-type foamed resins such as foamed polyvinyl chloride. Further, foamed synthetic rubbers may be utilized as the foamed plastics.

In the foamed plastics, the characteristics relating to foams such as the form of foams (continuous foams, independent foams or a mixture thereof), a foaming magnification, a foam size, and a thickness between foams are not particularly restricted, and may be suitably selected among those relating to foams in the conventional foamed plastics. The foamed plastics may be formed utilizing a conventionally or commonly employed forming method (for example a forming method utilizing a foaming agent).

The surface of the base material formed by a foamed substance may be subjected to a conventional surface treatment. For example, a surface of the base material formed by a foamed substance, at the side of the pressure-sensitive adhesive layer, may be subjected to a chemical or physical surface treatment, such as an undercoating, a corona discharge treatment or a plasma treatment. Also a surface of the base material formed by a foamed substance, on the side opposite to the pressure-sensitive adhesive layer (in case of a single-faced pressure-sensitive adhesive sheet with base), may be subjected to a rear surface treatment. The base material formed by a foamed substance may have a single-layered structure or a laminate-layered structure.

In the base material formed by a foamed substance, various additives may be blended according to the necessity, for example, a filler (such as an inorganic filler or an organic filler), an antiaging agent, an antioxidant, an ultraviolet absorber, an antistatic, a lubricant, a plasticizer, a colorant (such as a pigment or a dye), and a surfactant.

In the present invention, the thickness of the base material formed by a foamed substance is not particularly restricted, but is generally about from 0.1 to 10 mm.

### Pressure-sensitive adhesive layer

According to the pressure-sensitive adhesive sheet of the present invention, the pressure-sensitive adhesive layer formed on at least one surface of the base material formed by a foamed substance is formed by the water-dispersible acrylic pressure-sensitive adhesive composition for foamed substance. The water-dispersible acrylic pressure-sensitive adhesive composition for foamed substance is an acrylic polymer composition in a form in which a water-dispersible acrylic copolymer (a) and a water-dispersible acrylic low-molecular weight component (b) are dispersed in water. The water-dispersible acrylic pressure-sensitive adhesive composition for foamed substance may be employed singly or in a combination of two or more kinds.

In the water-dispersible acrylic pressure-sensitive adhesive composition for foamed substance, a proportion of the water-dispersible acrylic copolymer (a) and the water-dispersible acrylic low-molecular weight component (b) is not particularly restricted. The proportion of the water-dispersible acrylic low-molecular weight component (b) is preferably within a range of from 10 to 50wt% with respect to the water-dispersible acrylic copolymer (a), more preferably from 30 to 50wt% with respect to the water-dispersible acrylic copolymer (a). When the proportion of the water-dispersible acrylic low-molecular weight component (b) is less than 10wt% with respect to the water-dispersible acrylic copolymer (a), the adhesivity of the pressure-sensitive adhesive layer to the base material formed by a formed substance is decreased. On the other hand, when the proportion exceeds 50wt%, the cohesive power of the pressure-sensitive adhesive as a whole is reduced, whereby a cohesive power necessary as the pressure-sensitive adhesive may not be obtained.

### Water-dispersible acrylic copolymer (a)

The water-dispersible acrylic copolymer (a) is employed as a base polymer of the pressure-sensitive adhesive (basic component of pressure-sensitive adhesive). It is important that the water-dispersible acrylic copolymer (a) has a weight-average molecular weight of from 400,000 to 900,000 (equal to or larger than 400,000 but equal to or smaller than 900,000). The water-dispersible acrylic copolymer (a) preferably has a weight-average molecular weight of from 500,000 to 800,000, and more preferably from 500,000 to 700,000. When the weight-average molecular weight of the water-dispersible acrylic copolymer (a) is less than 400,000, a sufficient pressure-sensitive adhesive force necessary in the pressure-sensitive adhesive cannot be obtained. On the other hand, when the weight-average molecular weight exceeds 900,000, a tack property and an initial adhesive power of the pressure-sensitive adhesive are reduced. The weight-average molecular weight of the water-dispersible acrylic copolymer (a) may be controlled by types and amounts of the polymerization initiator and the chain transfer agent, a temperature and a time of polymerization, a monomer concentration and a monomer adding rate.

The weight-average molecular weight (Mw) of the water-dispersible acrylic copolymer (a) can be measured by gel permeation chromatography (GPC). More specifically, it can be measured with a GPC measuring apparatus HLC-8220GPC (trade name, manufactured by Tosoh Corp.), as a polystyrene converted value under following conditions:
GPC measuring conditions:
   * sample concentration: 0.2wt% (tetrahydrofuran solution)
   * sample injection amount: 10 µl
   * eluting liquid: tetrahydrofuran (THF)
   * flow rate (flow speed): 0.6 mL/min
   * column temperature (measuring temperature): 40°C
   * column: sample column: "TSK guard column Super HZ-H" (one unit) + "TSK gel Super HZM-H" (two units) (foregoing trade names, manufactured by Tosoh Corp.)
   * reference column: "TSK gel Super H-RC" (one unit) (trade name, manufactured by Tosoh Corp.)
   * detector: differential refractometer (RI).

The water-dispersible acrylic copolymer (a) contains a (meth)acrylic acid alkyl ester having 2 to 14 carbon atoms in the alkyl group thereof as a principal monomer component, and also contains a functional group-containing monomer as a monomer component. The water-dispersible acrylic copolymer (a) may be employed singly or in a combination of two or more kinds.

Examples of the (meth)acrylic acid alkyl ester having 2 to 14 carbon atoms in the alkyl group thereof ((meth) acrylic acid C₂₋₁₄ alkyl ester) include an acrylic compound represented by the following formula (1). 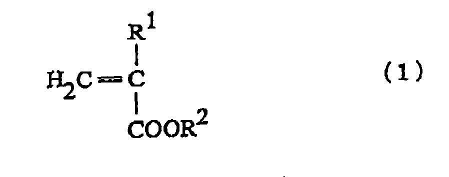 wherein R¹ represents a hydrogen atom or a methyl group; and R² represents an alkyl group having 2 to 14 carbon atoms.

In the formula (1), R¹ represents a hydrogen atom or a methyl group. R² represents an alkyl group having 2 to 14 carbon atoms, and specific examples thereof include an ethyl group, a propyl group, an isopropyl group, a butyl group, an isobutyl group, a s-butyl group, a t-butyl group, a pentyl group, an isopentyl group, a neopentyl group, a hexyl group, a heptyl group, an octyl group, an isooctyl group, 2-ethylhexyl group, a nonyl group, a decyl group, an isodecyl group, an undecyl group, a dodecyl group, a tridecyl group and a tetradecyl group.

Specpfic examples of such (meth)acrylic acid C₂₋₁₄ alkyl esters include ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth)acrylate.

The (meth)acrylic acid C₂₋₁₄ alkyl ester is preferably a (meth)acrylic acid alkyl ester having 2 to 10 carbon atoms in the alkyl group thereof, and particularly preferably a (meth)acrylic acid alkyl ester in which the alkyl group is a butyl group or a 2-ethylhexyl group (particularly butyl acrylate or 2-ethylhexyl acrylate).

The (meth)acrylic acid C₂₋₁₄ alkyl ester may be employed singly or in a combination of two or more kinds. As (meth)acrylic acid C₂₋₁₄ alkyl ester, for example, butyl acrylate may be employed singly, or butyl acrylate and 2-ethylhexyl acrylate may be employed in combination. In the case of employing butyl acrylate singly, or butyl acrylate and 2-ethylhexyl acrylate in combination, a proportion of butyl acrylate and 2-ethylhexyl acrylate is not particularly restricted, and may be selected within a range that 2-ethylhexyl acrylate/butyl acrylate (weight ratio) is about from 0/100 to 55/45 (preferably from 5/95 to 60/40).

The monomer components constituting the water-dispersible acrylic copolymer (a) include (meth)acrylic acid C₂₋₁₄ alkyl ester as a principal monomer component, and at least a functional group-containing monomer as another monomer capable of copolymerizing with the (meth)acrylic acid C₂₋₁₄ alkyl ester (such monomer being also called "copolymerizable monomer component"). A proportion of the (meth)acrylic acid C₂₋₁₄ alkyl ester in the entire monomer components constituting the water-dispersible acrylic copolymer (a) is 80wt% or higher (for example from 80 to 99.8wt%), preferably 85wt% or higher (for example from 85 to 99.5wt%), and further preferably 90wt% or higher (from 90 to 99wt%).

The functional group-containing monomer is employed for example for the purpose of introducing a crosslinking site in the water-dispersible acrylic copolymer (a). Use of the functional group-containing monomer allows to improve an adhesive power to a member to be adhered. As such functional group-containing monomer, particularly advantageous is a monomer containing a thermally crosslinking functional group, which introduces a thermal crosslinking site into the water-dispersible acrylic copolymer (a). The functional group-containing monomer may be employed singly or in a combination of two or more kinds.

The functional group-containing monomer may be, without particular restriction, any monomer component capable of copolymerization with (meth)acrylic acid C₂₋₁₄ alkyl ester and containing a functional group capable of constituting a crosslinking site, and examples thereof include carboxyl group-containing monomers such as (meth)acrylic acid, itaconic acid, crotonic acid, maleic acid, fumaric acid, and isocrotonic acid, and anhydrides thereof (such as maleic anhydride and itaconic anhydride); hydroxyl group-containing monomers for example hydroxyalkyl (meth)acrylate such as 2-hydroxyethyl (meth)acrylate, 2-hydroxypropyl (meth)acrylate, 3-hydroxypropyl (meth)acrylate, 2-hydroxybutyl (meth)acrylate and 4-hydroxybutyl (meth)acrylate, also vinyl alcohol and allyl alcohol; amide type monomers such as (meth)acrylamide, N,N-dimethyl (meth)acrylamide, N-butyl (meth)acrylamide, N-methylol (meth)acrylamide, N-methylolpropane (meth)acrylamide, N-methoxymethyl (meth)acrylamide, and N-butoxymethyl (meth)acrylamide; amino group-containing monomers such as aminoethyl (meth)acrylate, N,N-dimethylaminoethyl (meth)acrylate, and t-butylaminoethyl (meth)acrylate; epoxy group-containing monomers such as glycidyl (meth)acrylate, and methylglycidyl (meth)acrylate; cyano group-containing monomers such as acrylonitrile and methacrylonitrile; and monomers having a nitrogen-containing ring such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholine. As the functional group-containing monomer, a carboxyl group-containing monomer such as acrylic acid or an anhydride thereof may be employed advantageously.

The amount of the functional group-containing monomer may be selected, for example, within a range of from 0.5 to 12 parts by weight (preferably from 1 to 8 parts by weight) with respect to 100 parts by weight of (meth)acrylic acid C₂₋₁₄ alkyl ester as the principal monomer component.

As the copolymerizable monomer components, another copolymerizable monomer component may be employed for increasing the cohesive power of the water-dispersible acrylic copolymer (a). Examples of such another copolymerizable monomer include other (meth)acrylic acid alkyl esters such as methyl (meth)acrylate, pentadecyl (meth)acrylate, hexadecyl (meth)acrylate, heptadecyl (meth)acrylate, and octadecyl (meth)acrylate; vinyl ester type monomers such as vinyl acetate and vinyl propionate; styrenic monomers such as styrene, substituted styrene (α-methylstyrene), and vinyltoluene; non-aromatic ring-containing (meth)acrylic acid esters such as cycloalkyl (meth)acrylate (including cyclohexyl (meth)acrylate and cyclopentyl (meth)acrylate) and isobornyl (meth)acrylate; aromatic ring-containing (meth)acrylic acid esters such as (meth)acrylic acid aryl esters (including phenyl (meth)acrylate), (meth)acrylic acid aryloxyalkyl esters (including phenoxyethyl (meth)acrylate) and (meth)acrylic acid arylalkyl esters (including benzyl (meth)acrylate); olefinic monomers such as such as ethylene, propylene, butadiene, and isobutylene; vinyl chloride, vinylidene chloride; isocyanate group-containing monomers such as 2-methacryloyloxyethyl isocyanate; alkoxy group-containing monomers such as methoxyethyl (meth)acrylate, and ethoxyethyl (meth)acrylate; vinyl ether type monomers such as methyl vinyl ether and ethyl vinyl ether; and polyfunctional monomers, such as 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (poly)propylene glycol di(meth)acrylate, neopentyl glycol di(meth)acrylate, pentaerythritol di(meth)acrylate, trimethylolpropane tri(meth)acrylate, tetramethylolmethane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinylbenezene butyl di(meth)acrylate, and hexyl di(meth)acrylate. Such another copolymerizable monomer may be employed singly or in a combination of two or more kinds.

For polymerizing the water-dispersible acrylic copolymer (a), a conventional or common polymerization process may be adopted (such as emulsion polymerization, or solution polymerization), and an emulsion polymerization is preferred. For the polymerization, various polymerization processes may be utilized, such as a collective charging method (collective polymerizing method) or a monomer dropwise addition method (continuous addition or divided addition). The polymerization temperature may be suitably selected according to the type of the monomer components and the type of a polymerization initiator, and may be selected for example within a range of from 20 to 100°C.

In the polymerization of the water-dispersible acrylic copolymer (a), a polymerization initiator may be utilized. The polymerization initiator may be suitably selected among the conventional polymerization initiators according to the type of polymerization process. Examples of the polymerization initiator include azo type polymerization initiators such as 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl)propane] dihydrochloride, 2,2'-azobis(N,N'-dimethyleneisobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,9-trimethylpentane), and dimethyl 2,2'-azobis(2-methylpropionate); persulfates such as potassium persulfate and ammonium persulfate; peroxide type polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, and hydrogen peroxide; substituted ethane type polymerization initiator such as phenyl-substituted ethane; aromatic carbonyl compounds; redox type initiators by a combination of a peroxide and a reducing agent such as a combination of a peroxide and sodium ascorbate (including a combination of hydrogen peroxide water and sodium ascorbate), a combination of a peroxide and an iron (II) salt (including a combination of hydrogen peroxide water and an iron (II) salt), and a combination of a persulfate salt and sodium hydrogensulfite. Among these, an azo type polymerization initiator is particularly preferred. The polymerization initiator may be employed singly or in a combination of two or more kinds. The amount of the polymerization initiator may be an ordinary amount, and may be selected for example within a range of from 0.005 to 1 part by weight with respect to 100 parts by weight of all the monomer components.

At the polymerization, a chain transfer agent may be employed for the purpose of regulating the molecular weight. The chain transfer agent may be one of already known ones, and examples thereof include mercaptanes such as dodecanethiol(laurylmercaptane), glycidylmercaptane, 2-mercaptoethanol, mercaptoacetic acid, 2-ethylhexyl thioglycolate, and 2,3-dimercapto-1-propanol, and α-methylstyrene dimer. The amount of the chain transfer agent may be an ordinary amount, and may be selected for example within a range of from 0.001 to 0.5 part by weight with respect to 100 parts by weight of all the monomer components.

As the water-dispersible acrylic copolymer (a) has a form of an emulsion in which an acrylic polymer is dispersed in water, the water-dispersible acrylic copolymer (a) may be prepared either by directly utilizing an emulsion type polymer prepared by the emulsion polymerization, or by dispersing, in water, a polymer (acrylic copolymer) prepared by a polymerization process other than emulsion polymerization. At the emulsion polymerization or at the dispersion of the acrylic copolymer in water, an emulsifier may be employed. The emulsifier may be employed singly or in a combination of two or more kinds.

The emulsifier may be of any type, but an anionic emulsifier or a nonionic emulsifier can be employed advantageously. Examples of the anionic emulsifier include alkyl sulfate salt type anionic emulsifiers such as sodium laurylsulfate, ammonium laurylsulfate, and potassium laurylsulfate; polyoxyethylene alkyl ether sulfate salt type anionic emulsifiers such as sodium polyoxyethylene lauryl ether sulfate; polyoxyethylene alkylphenyl ether sulfate salt type anionic emulsifiers such as sodium polyoxyethylene laurylphenyl ether sulfate; sulfonate salt type anionic emulsifiers such as sodium dodecylbenzenesulfonate; and sulfosuccinic acid type anionic emulsifiers such as disodium lauryl sulfosuccinate and disodium lauryl polyoxyethylenesulfosuccinate. Further, examples of the nonionic emulsifiers include polyoxyethylene alkyl ether type nonionic emulsifiers such as polyoxyethylene lauryl ether; polyoxyethylene alkylphenyl ether type nonionic emulsifiers such as polyoxyethylene laurylphenyl ether; polyoxyethylene fatty acid esters and polyoxyethylene-polyoxypropylene block polymer. The amount of the emulsifier may be, without particular restriction, any amount capable of preparing the acrylic copolymer into an emulsion, and may be selected, for example, within a range of about from 0.2 to 10wt% (preferably from 0.5 to 5wt%) with respect to the acrylic copolymer or the total monomer components.

### Water-dispersible acrylic low-molecular weight component (b)

It is important that the water-dispersible acrylic low-molecular weight component (b) has a weight-average molecular weight of from 5,000 to 250,000. The water-dispersible acrylic low-molecular weight component (b) preferably has a weight-average molecular weight of from 10,000 to 250,000, and particularly preferably from 40,000 to 250,000. When the weight-average molecular weight of the water-dispersible acrylic low-molecular weight component (b) is less than 5,000, the cohesive power of the pressure-sensitive adhesive as a whole is decreased, whereby the pressure-sensitive adhesive characteristics are deteriorated. On the other, when the weight-average molecular weight of the water-dispersible acrylic low-molecular weight component (b) exceeds 250,000, an anchoring effect to the base material formed by a foamed substance is decreased, thereby becoming unable to obtain a sufficient adhesivity. The weight-average molecular weight of the water-dispersible acrylic low-molecular weight component (b) may be controlled by types and amounts of the polymerization initiator and the chain transfer agent, a temperature and a time of polymerization, a monomer concentration and a monomer adding rate.

The weight-average molecular weight of the water-dispersible acrylic low-molecular weight component (b) can be measured by a measuring method and measuring conditions same as those for the water-dispersible acrylic copolymer (a) .

It is important that the water-dispersible acrylic low-molecular weight component (b) includes a (meth)acrylic acid alkyl ester as a principal monomer component. Namely, it is important that the water-dispersible acrylic low-molecular weight component (b) is a water-dispersible (meth)acrylic acid alkyl ester-based low-molecular weight component. As the (meth)acrylic acid alkyl ester, advantageously employable is a (meth)acrylic acid C₂₋₁₄ alkyl ester which is employed as the principal monomer component in the water-dispersible acrylic copolymer (a). In the water-dispersible acrylic low-molecular weight component (b), the (meth)acrylic acid alkyl ester as the principal monomer component is preferably a (meth)acrylic acid alkyl ester having 2 to 10 carbon atoms in the alkyl group thereof, and particularly a (meth)acrylic acid alkyl ester in which the alkyl group is a butyl group or a 2-ethylhexyl group (particularly butyl acrylate or 2-ethylhexyl acrylate).

The (meth)acrylic acid alkyl ester may be employed singly or in a combination of two or more kinds. As (meth)acrylic acid alkyl ester, for example, butyl acrylate may be employed singly, or butyl acrylate and 2-ethylhexyl acrylate may be employed in combination. In the case of employing butyl acrylate singly, or butyl acrylate and 2-ethylhexyl acrylate in combination as (meth)acrylic acid alkyl ester, a proportion of butyl acrylate and 2-ethylhexyl acrylate is not particularly restricted, and may be selected within a range that 2-ethylhexyl acrylate/butyl acrylate (weight ratio) is about from 0/100 to 55/45 (preferably from 5/95 to 60/40).

The monomer components constituting the water-dispersible acrylic low-molecular weight component (b) may include, so long as it includes (meth)acrylic acid alkyl ester as a principal monomer component, another monomer component capable of copolymerizing with the (meth)acrylic acid alkyl ester (such another monomer being also called "copolymerizable monomer component"). A proportion of the (meth)acrylic acid alkyl ester in the entire monomer components constituting the water-dispersible acrylic low-molecular weight component (b) is 80wt% or higher (for example from 80 to 99.8wt%), preferably 85wt% or higher (for example from 85 to 99.5wt%), and further preferably 90wt% or higher (from 90 to 99wt%).

The copolymerizable monomer component may be employed for example for the purpose of introducing a crosslinking site in the water-dispersible acrylic low-molecular weight component (b) or increasing the cohesive power thereof. The copolymerizable monomer component may be employed singly or in a combination of two or more kinds.

More specifically, as such copolymerizable monomer component, in order to introduce a crosslinking site in the water-dispersible acrylic low-molecular weight component (b), employable is a functional group-containing monomer component (particularly a monomer containing a thermally crosslinking functional group, for introducing a thermal crosslinking site into the water-dispersible acrylic low-molecular weight component (b)). Examples of the functional group-containing monomer include the monomer components cited as examples of the functional group-containing monomer for the water-dispersible acrylic copolymer (a) (for example a carboxyl group-containing monomer such as (meth)acrylic acid or an anhydride thereof).

Further, as the copolymerizable monomer component, another copolymerizable monomer component may be employed for the purpose of increasing the cohesive power of the water-dispersible acrylic low-molecular weight component (b). Examples of such another copolymerizable monomer component include the monomer components cited as examples of another copolymerizable monomer component employed for increasing the cohesive power of the water-dispersible acrylic copolymer (a).

For polymerizing the water-dispersible acrylic low-molecular weight component (b) a polymerization process as in the case of the water-dispersible acrylic copolymer (a) may be adopted (such as emulsion polymerization, or solution polymerization), and an emulsion polymerization process is preferred. For the polymerization, various polymerization processes may be utilized, such as a collective charging method (collective polymerizing method) or a monomer dropwise addition method (continuous addition or divided addition). The polymerization temperature may be suitably selected according to the type of the monomer components and the type of a polymerization initiator, and may be selected for example within a range of from 20 to 100°C.

In the polymerization of the water-dispersible acrylic low-molecular weight component (b), as in the case of water-dispersible acrylic copolymer (a), a polymerization initiator, a chain transfer agent, an emulsifier and the like may be utilized. Specific examples and amounts thereof are similar to the case of the water-dispersible acrylic copolymer (a).

As the water-dispersible acrylic low-molecular weight component (b) has a form of an emulsion in which an acrylic polymer is dispersed in water, as in the case of the water-dispersible acrylic copolymer (a), the water-dispersible acrylic low-molecular weight component (b) may be prepared either by directly utilizing an emulsion type polymer prepared by the emulsion polymerization, or by dispersing, in water, a polymer prepared by a polymerization process other than emulsion polymerization.

The water-dispersible acrylic pressure-sensitive adhesive composition for foamed substance may utilize a crosslinking agent, according to the necessity. The crosslinking agent is not particularly restricted, and may be selected among those already known or used (for example epoxy type crosslinking agents, oxazoline type crosslinking agents, isocyanate type crosslinking agents, aziridine type crosslinking agents, melamine type crosslinking agents, peroxide type crosslinking agents, urea type crosslinking agents, metal alkoxide type crosslinking agents, metal chelate type crosslinking agents, metal salt type crosslinking agents, carbodiimide type crosslinking agents, hydrazine type crosslinking agents, amin type crosslinking agents, and silane coupling agents). The crosslinking agent may be an oil-soluble crosslinking agent or a watersoluble crosslinking agent. The crosslinking agent may be employed singly or in a combination of two or more kinds. Examples of the preferred combination of the crosslinking agents include a combination of an epoxy type crosslinking agent and a carbodiimide type crosslinking agent, a combination of an epoxy type crosslinking agent and a silane coupling agent, a combination of an epoxy type crosslinking agent and an oxazoline type crosslinking agent, a combination of an oxazoline type crosslinking agent and a silane coupling agent, a combination of a carbodiimide type crosslinking agent and a silane coupling agent, and a combination of a carbodiimide type crosslinking agent and an oxazoline type crosslinking agent, more preferably a combination of an oxazoline type crosslinking agent and a silane coupling agent.

The amount of the crosslinking agent is not particularly restricted, and may be selected within a range of 10 parts by weight or less (for example from 0.005 to 10 parts by weight, preferably from 0.01 to 5 parts by weight) with respect to 100 parts by weight of the water-dispersible acrylic copolymer (a) and/or the water-dispersible acrylic low-molecular weight component (b).

The water-dispersible acrylic pressure-sensitive adhesive composition for foamed substance may contain, according to the necessity, other additives (for example a pressure-sensitive adhesivity providing agent, an antiaging agent, an ultraviolet absorber, an antioxidant, a photostabilizer, a releasability regulating agent, a plasticizer, a softener, a filler, a colorant (pigment or dye), a surfactant and an antistatic), and may further contain a base (such as ammonia water) or an acid for regulating the pH. The pressure-sensitive adhesivity providing agent is not particularly restricted, but an emulsion containing a pressure-sensitive adhesivity providing resin (pressure-sensitive adhesivity providing resin emulsion) may be employed advantageously. Examples of the pressure-sensitive adhesivity providing resin emulsion include a composition prepared by dispersing a known pressure-sensitive adhesivity providing resin such as a rosin type resin, a terpene type resin, an aliphatic petroleum resin, an aromatic petroleum resin, a copolymer type petroleum resin, an alicyclic petroleum resin, a xylene resin or an elastomer, in water utilizing an emulsifier or a surfactant according to the necessity.

The water-dispersible acrylic pressure-sensitive adhesive composition for foamed substance can be prepared by mixing or kneading the aforementioned components (water-dispersible acrylic copolymer (a), water-dispersible acrylic low-molecular weight component (b) and optionally a crosslinking agent, a pressure-sensitive adhesivity providing agent and various additives) in specified amounts.

Further, the pressure-sensitive adhesive layer may be prepared with the water-dispersible acrylic pressure-sensitive adhesive composition for foamed substance, by a conventional forming method for the pressure-sensitive adhesive layer. The pressure-sensitive adhesive layer may have a single-layered structure or a laminate-layered structure. The thickness of the pressure-sensitive adhesive layer is not particularly restricted and may be suitably selected for example within a range of from 2 to 200 µm (preferably from 5 to 120 µm).

### Releasable liner

In the present invention, a releasable liner may be used in order to protect the pressure-sensitive adhesive layer, according to the necessity. The releasable liner is not particularly restricted and may be selected among those already known. As the releasable liner, advantageously employable is a substrate having a releasably treated layer prepared by a releasably treating agent on at least one side thereof (both sides or one side thereof), and also employable is a low-adhesivity substrate formed by a fluorinated polymer (for example polytetrafluoroethylene, polychlorotrifluoroethylene, polyvinyl fluoride, polyvinylidene fluoride, a tetrafluoroethylenehexafluoropropylene copolymer or a chlorofluoroethylenevinylidene fluoride copolymer), or a low-adhesivity substrate formed by a non-polar polymer (for example an olefinic resin such as polyethylene or polypropylene).

As the substrate for the releasable liner, a plastic sheet or film is employed advantageously, but a paper, a cloth, a rubber sheet, a foamed sheet or a metal foil, cited as examples as the substrate for support, may also be used. The plastic sheet or film, as the substrate for the releasable liner, is not particularly restricted, and may be suitably selected among those already known. Further, the releasably treating agent for forming the releasably treated layer may be already known or used releasably treating agents (such as a silicone type releasably treating agent, a fluorinated releasably treating agent or a long-chain alkyl type releasably treating agent).

The thicknesses of the substrate and the releasably treated layer in the releasable liner are not particularly restricted, and may be suitably selected according to the purpose. The total thickness of the releasable liner is preferably 15 µm or larger, and more preferably from 25 to 500 µm.

### Pressure-sensitive adhesive sheet

In the present invention, the pressure-sensitive adhesive sheets mean sheet-shaped pressure-sensitive adhesive articles which have or may have a sheet-shaped form having a pressure-sensitive adhesive layer on at least one surface of a base material foamed by a foamed substance. More specifically, the pressure-sensitive adhesive sheets include a pressure-sensitive adhesive tape, a pressure-sensitive adhesive sheet, a pressure-sensitive adhesive film and a pressure-sensitive adhesive label.

The aforementioned pressure-sensitive adhesive sheets may include, so long as having a structure in which a pressure-sensitive adhesive layer of the water-dispersible acrylic pressure-sensitive adhesive composition for foamed substance is disposed on the base material formed by a foamed substance, other layers (such as an intermediate layer, an undercoat layer and the like) within an extent not detrimentally affecting the effect of the invention.

Such pressure-sensitive adhesive sheet may be prepared, according to the type of the pressure-sensitive adhesive sheet, by a producing process for an ordinary pressure-sensitive adhesive tape or sheet. For example, it can be prepared by (1) a process of coating and drying or curing, on at least one surface (on one surface or both surfaces) of the base material formed by a foamed substance, the water-dispersible acrylic pressure-sensitive adhesive composition for foamed substance so as to obtain a predetermined thickness after the drying or curing, thereby obtaining a pressure-sensitive adhesive layer, followed by optionally winding into a roll, or by (2) a process of coating and drying or curing, on a separator, the water-dispersible acrylic pressure-sensitive adhesive composition for foamed substance so as to obtain a predetermined thickness after the drying or curing, thereby obtaining a pressure-sensitive adhesive layer, and transferring the pressure-sensitive adhesive layer onto at least one surface (on one surface or both surfaces) of the base material formed by a foamed substance, followed by optionally winding into a roll. In the case of the pressure-sensitive adhesive sheet illustrated in Figs. 1B or 1D, a pressure-sensitive adhesive sheet of a form wound into a roll can be produced by a winding under superposing a pressure-sensitive adhesive surface on one side (surface of the pressure-sensitive adhesive layer) of the pressure-sensitive adhesive sheet with a releasing surface on the other side (surface of a rear treated layer of the base material or surface of the releasably treated layer of a releasable liner).

Particularly, in the present invention, since the pressure-sensitive adhesive layer to be formed on the base material formed by a foamed substance is formed by the water-dispersible acrylic pressure-sensitive adhesive composition for foamed substance, the pressure-sensitive adhesive layer may be formed with an excellent adhesivity on the base material formed by a foamed substance, even in a method of transferring a pressure-sensitive adhesive layer prepared in advance, onto the base material formed by a foamed substance.

In the course of coating the water-dispersible acrylic pressure-sensitive adhesive composition for foamed substance, a conventionally or commonly used coating machine such as a gravure roll coater, a reverse roll coater, a kiss roll coater, a dip roll coater, a bar coater, a knife coater or a spray coater may be employed.

### Examples

In the following, the present invention will be clarified in more details by examples. In the following description, a part means a part by weight, and % means % by weight.

The weight-average molecular weight of polymers such as acrylic copolymer was measured with a GPC measuring apparatus HLC-8220GPC (trade name, manufactured by Tosoh Corp.), and was obtained as a polystyrene converted value. Measuring conditions were as follows:
* sample concentration: 0.2wt% (tetrahydrofuran solution)
* sample injection amount: 10 µl
* eluting liquid: tetrahydrofuran
* flow rate: 0.6 mL/min
* measuring temperature: 40°C
* column: sample column: "TSK guard column Super HZ-H" (one unit) + "TSK gel Super HZM-H" (two units) (foregoing trade names, manufactured by Tosoh Corp.); reference column; "TSK gel Super H-RC" (one unit) (manufactured by Tosoh Corp.)
* detector: differential refractometer (RI).

### Example 1

In a reactor equipped with a cooling tube, a nitrogen introducing tube, a thermometer and an agitator, 0.1 parts of 2,2'-azobis[N-(2-carboxyethyl)-2-methylpropionamidine] hydrate (polymerization initiator) (trade name VA-057, manufactured by Wako Pure Chemical Industries Ltd.) and 33 parts of ion-exchanged water were charged, and agitated for 1 hour under introduction of nitrogen gas. The mixture was maintained at 60°C, and an emulsion, prepared by adding and emulsifying 98 parts of 2-ethylhexyl acrylate, 2 parts of acrylic acid, 0.06 parts of dodecanethiol (chain transfer agent) and 2 parts of sodium polyoxyethylene laurylsulfate (emulsifier) in 33 parts of ion-exchanged water, was dropwise added over 3 hours to execute an emulsion polymerization reaction, and the mixture was ripened for further 3 hours to obtain a water-dispersible acrylic copolymer having a weight-average molecular weight of 550,000 (hereinafter also called "water-dispersible acrylic copolymer A"). The reaction mixture containing the water-dispersible acrylic copolymer A was adjusted to pH 8 by the addition of 10% ammonia water to obtain an aqueous dispersion of water-dispersible acrylic copolymer of a form, in which the water-dispersible acrylic copolymer A was dispersed in water (hereinafter also called "acrylic copolymer aqueous dispersion A").

Then, in a reactor equipped with a cooling tube, a nitrogen introducing tube, a thermometer and an agitator, 0.1 parts of 2,2'-azobis[N-(2-carboxyethyl)-2-methylpropionamidine] hydrate (polymerization initiator) (trade name VA-057, manufactured by Wako Pure Chemical Industries Ltd.) and 33 parts of ion-exchanged water were charged, and agitated for 1 hour under introduction of nitrogen gas. The mixture was maintained at 60°C, and an emulsion, prepared by adding and emulsifying 95 parts of 2-ethylhexyl acrylate, 5 parts of acrylic acid, 1 part of dodecanethiol (chain transfer agent) and 2 parts of sodium polyoxyethylene laurylsulfate (emulsifier) in 33 parts of ion-exchanged water, was dropwise added over 3 hours to execute an emulsion polymerization reaction, and the mixture was ripened for further 3 hours to obtain a water-dispersible acrylic low-molecular weight component having a weight-average molecular weight of 43,000 (hereinafter also called "water-dispersible acrylic low-molecular weight component A"). The reaction mixture containing the water-dispersible acrylic low-molecular weight component A was adjusted to pH 8 by the addition of 10% ammonia water to obtain an aqueous dispersion of water-dispersible acrylic low-molecular weight component of a form, in which the water-dispersible acrylic low-molecular weight component A was dispersed in water (hereinafter also called "acrylic low-molecular weight component aqueous dispersion A").

Then, 50 parts (solid) of the acrylic low-molecular weight component aqueous dispersion A were blended with 100 parts (solid) of the acrylic copolymer aqueous dispersion A, and 0.15 parts of an epoxy type crosslinking agent (trade name Tetrad C, manufactured by Mitsubishi Gas Chemical Co.) were blended with 100 parts (solid) of the acrylic copolymer aqueous dispersion A to obtain an aqueous dispersion of an acrylic pressure-sensitive adhesive (hereinafter also called "acrylic pressure-sensitive adhesive aqueous dispersion A").

On a surface of a base material, having a laminated structure on both surfaces of a bond paper, a silicone-type releasing agent was coated to form a releasable liner, and, on a surface thereof coated with the silicone-type releasing agent, the acrylic pressure-sensitive adhesive aqueous dispersion A was coated and dried at 100°C for 3 minutes to obtain a pressure-sensitive adhesive layer of a thickness of 100 µm. The pressure-sensitive adhesive layer was adhered to both surfaces of a base material of foamed polyethylene [trade name: PE Lite LS-10 (corona treated on both sides, wetting index: 34 dyne/cm), manufactured by Inoac Corporation] to obtain a pressure-sensitive adhesive sheet. After the preparation of the pressure-sensitive adhesive sheet, it was let to stand in an environment of 50°C for 3 days to obtain a sample for evaluation.

### Example 2

In a reactor equipped with a cooling tube, a nitrogen introducing tube, a thermometer and an agitator, 0.1 parts of 2,2'-azobis[N-(2-carboxyethyl)-2-methylpropionamidine] hydrate (polymerization initiator) (trade name VA-057, manufactured by Wako Pure Chemical Industries Ltd.) and 33 parts of ion-exchanged water were charged, and agitated for 1 hour under introduction of nitrogen gas. The mixture was maintained at 60°C, and an emulsion, prepared by adding and emulsifying 98 parts of 2-ethylhexyl acrylate, 2 parts of acrylic acid, 0.06 parts of dodecanethiol (chain transfer agent), 0.07 parts of a silane coupling agent (trade name: KBM-503, manufactured by Shin-etsu Chemical Co.) and 2 parts of sodium polyoxyethylene laurylsulfate (emulsifier) in 33 parts of ion-exchanged water, was dropwise added over 3 hours to execute an emulsion polymerization reaction, and the mixture was ripened for further 3 hours to obtain a water-dispersible acrylic copolymer having a weight-average molecular weight of 500,000 (hereinafter also called "water-dispersible acrylic copolymer B"). The reaction mixture containing the water-dispersible acrylic copolymer B was adjusted to pH 8 by the addition of 10% ammonia water to obtain an aqueous dispersion of water-dispersible acrylic copolymer of a form, in which the water-dispersible acrylic copolymer B was dispersed in water (hereinafter also called "acrylic copolymer aqueous dispersion B").

Also, in the same manner as in Example 1, the water-dispersible acrylic low-molecular weight component A and the acrylic low-molecular weight component aqueous dispersion A were obtained.

Then, 50 parts (solid) of the acrylic low-molecular weight component aqueous dispersion A were blended with 100 parts (solid) of the acrylic copolymer aqueous dispersion B to obtain an aqueous dispersion of an acrylic pressure-sensitive adhesive (hereinafter also called "acrylic pressure-sensitive adhesive aqueous dispersion B").

A pressure-sensitive adhesive sheet and a sample for evaluation were prepared in the same manner as in Example 1, except for employing the acrylic pressure-sensitive adhesive aqueous dispersion B.

### Example 3

In the same manner as in Example 2, the water-dispersible acrylic copolymer B and the acrylic copolymer aqueous dispersion B were prepared.

Then, in a reactor equipped with a cooling tube, a nitrogen introducing tube, a thermometer and an agitator, 0.1 parts of 2,2'-azobis[N-(2-carboxyethyl)-2-methylpropionamidine] hydrate (polymerization initiator) (trade name VA-057, manufactured by Wako Pure Chemical Industries Ltd.) and 33 parts of ion-exchanged water were charged, and agitated for 1 hour under introduction of nitrogen gas. The mixture was maintained at 60°C, and an emulsion, prepared by adding and emulsifying 98 parts of 2-ethylhexyl acrylate, 2 parts of acrylic acid, 0.13 parts of dodecanethiol (chain transfer agent) and 2 parts of sodium polyoxyethylene laurylsulfate (emulsifier) in 33 parts of ion-exchanged water, was dropwise added over 3 hours to execute an emulsion polymerization reaction, and the mixture was ripened for further 3 hours to obtain a water-dispersible acrylic low-molecular weight component having a weight-average molecular weight of 250,000 (hereinafter also called "water-dispersible acrylic low-molecular weight component B"). The reaction mixture containing the water-dispersible acrylic low-molecular weight component B was adjusted to pH 8 by the addition of 10% ammonia water to obtain an aqueous dispersion of water-dispersible acrylic low-molecular weight component of a form, in which the water-dispersible acrylic low-molecular weight component B was dispersed in water (hereinafter also called "acrylic low-molecular weight component aqueous dispersion B").

Then, 50 parts (solid) of the acrylic low-molecular weight component aqueous dispersion B were blended with 100 parts (solid) of the acrylic copolymer aqueous dispersion B, and 3 parts of an oxazoline type crosslinking agent (trade name wS -700, manufactured by Nippon Shokubai Co.) were blended with 100 parts (solid) of the acrylic copolymer aqueous dispersion B to obtain an aqueous dispersion of an acrylic pressure-sensitive adhesive (hereinafter also called "acrylic pressure-sensitive adhesive aqueous dispersion C").

A pressure-sensitive adhesive sheet and a sample for evaluation were prepared in the same manner as in Example 1, except for employing the acrylic pressure-sensitive adhesive aqueous dispersion C.

### Example 4

In the same manner as in Example 2, the water-dispersible acrylic copolymer B and the acrylic copolymer aqueous dispersion B were prepared.

Then, in a reactor equipped with a cooling tube, a nitrogen introducing tube, a thermometer and an agitator, 0.1 parts of 2,2'-azobis[N-(2-carboxyethyl)-2-methylpropionamidine] hydrate (polymerization initiator) (trade name VA-057, manufactured by Wako Pure Chemical Industries Ltd.) and 33 parts of ion-exchanged water were charged, and agitated for 1 hour under introduction of nitrogen gas. The mixture was maintained at 60°C, and an emulsion, prepared by adding and emulsifying 98 parts of 2-ethylhexyl acrylate, 2 parts of acrylic acid, 0.8 parts of dodecanethiol (chain transfer agent) and 2 parts of sodium polyoxyethylene laurylsulfate (emulsifier) in 33 parts of ion-exchanged water, was dropwise added over 3 hours to execute an emulsion polymerization reaction, and the mixture was ripened for further 3 hours to obtain a water-dispersible acrylic low-molecular weight component having a weight-average molecular weight of 49,000 (hereinafter also called "water-dispersible acrylic low-molecular weight component C"). The reaction mixture containing the water-dispersible acrylic low-molecular weight component C was adjusted to pH 8 by the addition of 10% ammonia water to obtain an aqueous dispersion of water-dispersible acrylic low-molecular weight component of a form, in which the water-dispersible acrylic low-molecular weight component C was dispersed in water (hereinafter also called "acrylic low-molecular weight component aqueous dispersion C").

Then, 30 parts (solid) of the acrylic low-molecular weight component aqueous dispersion C were blended with 100 parts (solid) of the acrylic copolymer aqueous dispersion B, and 4 parts of an oxazoline type crosslinking agent (trade name WS-700, manufactured by Nippon Shokubai Co.) were blended with 100 parts (solid) of the acrylic copolymer aqueous dispersion B to obtain an aqueous dispersion of an acrylic pressure-sensitive adhesive (hereinafter also called "acrylic pressure-sensitive adhesive aqueous dispersion D").

A pressure-sensitive adhesive sheet and a sample for evaluation were prepared in the same manner as in Example 1, except for employing the acrylic pressure-sensitive adhesive aqueous dispersion D.

### Example 5

In the same manner as in Example 2, the water-dispersible acrylic copolymer B and the acrylic copolymer aqueous dispersion B were prepared. Also in the same manner as in Example 4, the acrylic water-dispersible low-molecular weight component C and the acrylic low-molecular weight component aqueous dispersion C were prepared.

Then, 50 parts (solid) of the acrylic low-molecular weight component aqueous dispersion C were blended with 100 parts (solid) of the acrylic copolymer aqueous dispersion B, and 4 parts of an oxazoline type crosslinking agent (trade name WS-700, manufactured by Nippon Shokubai Co.) were blended with 100 parts (solid) of the acrylic copolymer aqueous dispersion B to obtain an aqueous dispersion of an acrylic pressure-sensitive adhesive (hereinafter also called "acrylic pressure-sensitive adhesive aqueous dispersion E").

A pressure-sensitive adhesive sheet and a sample for evaluation were prepared in the same manner as in Example 1, except for employing the acrylic pressure-sensitive adhesive aqueous dispersion E.

### Example 6

In the same manner as in Example 2, the water-dispersible acrylic copolymer B and the acrylic copolymer aqueous dispersion B were prepared.

Then, in a reactor equipped with a cooling tube, a nitrogen introducing tube, a thermometer and an agitator, 0.1 parts of 2,2'-azobis[N-(2-carboxyethyl)-2-methylpropionamidine] hydrate (polymerization initiator) (trade name VA-057, manufactured by Wako Pure Chemical Industries Ltd.) and 33 parts of ion-exchanged water were charged, and agitated for 1 hour under introduction of nitrogen gas. The mixture was maintained at 60°C, and an emulsion, prepared by adding and emulsifying 98 parts of 2-ethylhexyl acrylate, 2 parts of acrylic acid, 1.2 parts of dodecanethiol (chain transfer agent) and 2 parts of sodium polyoxyethylene laurylsulfate (emulsifier) in 33 parts of ion-exchanged water, was dropwise added over 3 hours to execute an emulsion polymerization reaction, and the mixture was ripened for further 3 hours to obtain a water-dispersible acrylic low-molecular weight component having a weight-average molecular weight of 10,000 (hereinafter also called "water-dispersible acrylic low-molecular weight component D"). The reaction mixture containing the water-dispersible acrylic low-molecular weight component D was adjusted to pH 8 by the addition of 10% ammonia water to obtain an aqueous dispersion of water-dispersible acrylic low-molecular weight component of a form, in which the water-dispersible acrylic low-molecular weight component D was dispersed in water (hereinafter also called "acrylic low-molecular weight component aqueous dispersion D").

Then, 30 parts (solid) of the acrylic low-molecular weight component aqueous dispersion D were blended with 100 parts (solid) of the acrylic copolymer aqueous dispersion B, and 4 parts of an oxazoline type crosslinking agent (trade name WS-700, manufactured by Nippon Shokubai Co.) were blended with 100 parts (solid) of the acrylic copolymer aqueous dispersion B to obtain an aqueous dispersion of an acrylic pressure-sensitive adhesive (hereinafter also called "acrylic pressure-sensitive adhesive aqueous dispersion F").

A pressure-sensitive adhesive sheet and a sample for evaluation were prepared in the same manner as in Example 1, except for employing the acrylic pressure-sensitive adhesive aqueous dispersion F.

### Comparative Example 1

In the same manner as in Example 1, the water-dispersible acrylic copolymer A and the acrylic copolymer aqueous dispersion A were prepared. Then, 0.15 parts of an epoxy type crosslinking agent (trade name Tetrad C, manufactured by Mitsubishi Gas Chemical Co.) were blended with 100 parts (solid) of the acrylic copolymer aqueous dispersion A to obtain an aqueous dispersion of an acrylic pressure-sensitive adhesive (hereinafter also called "acrylic pressure-sensitive adhesive aqueous dispersion G").

A pressure-sensitive adhesive sheet and a sample for evaluation were prepared in the same manner as in Example 1, except for employing the acrylic pressure-sensitive adhesive aqueous dispersion G.

### Comparative Example 2

In the same manner as in Example 2, the water-dispersible acrylic copolymer B and the acrylic copolymer aqueous dispersion B were prepared. An aqueous dispersion of an acrylic pressure-sensitive adhesive (hereinafter also called "acrylic pressure-sensitive adhesive aqueous dispersion H") was obtained in the same manner as in Example 2, except that the acrylic low-molecular weight component aqueous dispersion A was not used as the aqueous dispersion of the acrylic pressure-sensitive adhesive. A pressure-sensitive adhesive sheet and a sample for evaluation were prepared in the same manner as in Example 1, except for employing the acrylic pressure-sensitive adhesive aqueous dispersion H as the aqueous dispersion of the acrylic pressure-sensitive adhesive (namely employing the acrylic copolymer aqueous dispersion B directly as the acrylic pressure-sensitive adhesive aqueous dispersion).

### Comparative Example 3

In the same manner as in Example 1, the water-dispersible acrylic copolymer A and the acrylic copolymer aqueous dispersion A were prepared. Then, 5 parts of an oxazoline type crosslinking agent (trade name Epocross WS-700, manufactured by Nippon Shokubai Co.) were blended with 100 parts (solid) of the acrylic copolymer aqueous dispersion A to obtain an aqueous dispersion of an acrylic pressure-sensitive adhesive (hereinafter also called "acrylic pressure-sensitive adhesive aqueous dispersion I'').

A pressure-sensitive adhesive sheet and a sample for evaluation were prepared in the same manner as in Example 1, except for employing the acrylic pressure-sensitive adhesive aqueous dispersion I.

### Evaluation

On the evaluation samples obtained in Examples and Comparative Examples, an adhesivity to base material, a holding power and a pressure-sensitive adhesive force were measured or evaluated by the following methods (evaluation method for adhesivity to base material, measuring method for holding power, and measuring method for pressure-sensitive adhesive force). Results are shown in Table 1.

### Evaluation method for adhesivity to base material

With regard to the evaluation sample, the pressure-sensitive adhesive layer, transferred onto the base material of foamed substance (base material of polyethylene foam) was rubbed with a finger by 10 reciprocating strokes, then a level of removal of the pressure-sensitive adhesive was visually observed, and the adhesivity to the base material was evaluated according to following criteria.

### Evaluation criteria for adhesivity to base material

A: pressure-sensitive adhesive not removed from the base material of foamed substance
B:pressure-sensitive adhesive somewhat removed from the base material of foamed substance but only in a practically acceptable level
C: pressure-sensitive adhesive removed

### Measuring method for holding power

The evaluation sample was cut into a width of 10 mm and a length of 100 mm. The evaluation sample of a width of 10 mm and a length of 100 mm was pressed to a plywood as an adhesion member, with an adhesion area of a width of 10 mm and a length of 20 mm by a reciprocating stroke of a 2-kg roller, then let to stand for 1 hour at 40°C, and a load of 200 g was applied to an end. A displacement after 1 hour at 40°C, from the state of pressed adhesion, was measured according to JIS Z 0237, and the holding power was evaluated by the displacement (distance) after 1 hour at 40°C.

### Measuring method for pressure-sensitive adhesive force

The evaluation sample was cut into a width of 20 mm and a length of 100 mm. The evaluation sample of a width of 20 mm and a length of 100 mm was pressed to a following adhesion member by a reciprocating stroke of a 2-kg roller, and let to stand under following standing conditions. Thereafter, the pressure-sensitive adhesive force was evaluated according to JIS Z 0237, by peeling off the sample by a tensile tester with a tensile speed of 300 mm/min and a peeling angle of 180° (measuring environment 23°C, 50%RH), and measuring a force required for peeling (180° peeling force) (N/20 mm):
adhesion member: gypsum board (manufactured by Nippon Test Panel Co.)
standing conditions: 23°C, 20 minutes

**Table 1**

| | adhesivity to base material | holding power (mm/hr) | pressure-sensitive adhesive force (N/20 mm) |
|---|---|---|---|
| Example 1 | A | 3.0 | 8.0 |
| Example 2 | A | 2.0 | 9.0 |
| Example 3 | A | 0.1 | 9.0 |
| Example 4 | B | 0.2 | 7.5 |
| Example 5 | A | 0.1 | 8.7 |
| Example 6 | A | 0.7 | 8.0 |
| Comp. Ex. 1 | C | 0.5 | 7.0 |
| Comp. Ex. 2 | C | 1.1 | 8.8 |
| Comp. Ex. 3 | A | 1.9 | 5.7 |

As will be apparent from Table 1, it is confirmed that according to the Examples of the present invention, a pressure-sensitive adhesive sheets having an excellent adhesivity to the base material foamed by a foamed substance even in case of transfer coating, and also having a satisfactory adhesivity to a rough surface and a satisfactory holding power can be prepared.

In practical use, the holding power is preferably at a level not showing a dropping, and the pressure-sensitive adhesive force is preferably 7 N/20 mm or larger.

While the present invention has been described in detail and with reference to specific embodiments thereof, it will be apparent to one skilled in the art that various changes and modifications can be made therein without departing from the scope thereof.

This application is based on Japanese patent application No. 2006-054570 filed on March 1, 2006 and Japanese patent application No. 2006-342322 filed December 20, 2006, the entire contents thereof being hereby incorporated by reference.

## Claims

1. A pressure-sensitive adhesive sheet, which comprises:
a base material comprising a foamed substance; and
a pressure-sensitive adhesive layer disposed on at least one surface of the base material,
wherein the pressure-sensitive adhesive layer is formed by a water-dispersible acrylic pressure-sensitive adhesive composition containing:
a water-dispersible acrylic copolymer (a) having a weight-average molecular weight of from 400,000 to 900,000, said copolymer comprising a (meth)acrylic acid alkyl ester having 2 to 14 carbon atoms in the alkyl group thereof as a principal monomer component and a functional group-containing monomer as a monomer component; and
a water-dispersible acrylic low-molecular weight component (b) having a weight-average molecular weight of from 5,000 to 250,000.

2. The pressure-sensitive adhesive sheet according to claim 1, wherein the water-dispersible acrylic pressure-sensitive adhesive composition contains the water-dispersible acrylic low-molecular weight component (b) in a proportion of from 10 to 50wt% with respect to the water-dispersible acrylic copolymer (a).

3. The pressure-sensitive adhesive sheet according to claim 2, wherein the water-dispersible acrylic pressure-sensitive adhesive composition contains the water-dispersible acrylic low-molecular weight component (b) in a proportion of from 30 to 50wt% with respect to the water-dispersible acrylic copolymer (a).

4. The pressure-sensitive adhesive sheet according to claim 1, wherein the water-dispersible acrylic copolymer (a) has a weight-average molecular weight of from 500,000 to 800, 000.

5. The pressure-sensitive adhesive sheet according to claim 4, wherein the water-dispersible acrylic copolymer (a) has a weight-average molecular weight of from 500,000 to 700,000.

6. The pressure-sensitive adhesive sheet according to claim 1, wherein the (meth)acrylic acid alkyl ester contained in the water-dispersible acrylic copolymer (a) has 2 to 10 carbon atoms in the alkyl group thereof.

7. The pressure-sensitive adhesive sheet according to claim 1, wherein the water-dispersible acrylic low-molecular weight component (b) has a weight-average molecular weight of from 10,000 to 250,000.

8. The pressure-sensitive adhesive sheet according to claim 7, wherein the water-dispersible acrylic low-molecular weight component (b) has a weight-average molecular weight of from 40,000 to 250,000.
